# EUROPEAN PATENT SPECIFICATION

(11) **EP 3 388 637 B1**
(45) Date of publication and mention of the grant of the patent: **18.12.2019**
(21) Application number: 18166675.1
(22) Date of filing: 10.04.2018
(51) Int. Cl.: F01D 9/06, F01D 11/24, F01D 25/08

(54) **COOLING AIR CHAMBER FOR BLADE OUTER AIR SEAL**
KÜHLLUFTKAMMER FÜR ÄUSSERE SCHAUFELLUFTDICHTUNG
CHAMBRE D'AIR DE REFROIDISSEMENT POUR JOINT D'AIR EXTÉRIEUR D'AUBE

(30) Priority: 11.04.2017 US 201715484166
(43) Date of publication of application: 17.10.2018
(73) Proprietor: United Technologies Corporation, Farmington, CT 06032 (US)
(72) Inventor: ORTIZ, Jonathan, El Centro, CA California 92243 (US); DEVORE, Matthew A., Rocky Hill, CT Connecticut 06067 (US); THORNTON, Lane Mikal, Tolland, CT Connecticut 06084 (US); HILL, James D., W. Abington Twp, PA Pennsylvania 18414 (US)
(74) Representative: Dehns

(56) References cited:
- EP-A1- 1 503 061
- EP-A2- 1 923 539
- WO-A1-01/65095
- WO-A1-2014/134513

## Description

### BACKGROUND OF THE INVENTION

This application relates to the supply of high pressure cooling air to a blade outer air seal through an outer diameter chamber.

Gas turbine engines are known and typically include a fan delivering air into a bypass duct as propulsion. The fan also delivers air into the compressor where air is compressed and delivered into a combustor. The air is mixed with fuel and ignited. Products of this combustion pass downstream over turbine rotors driving them to rotate. The turbine rotors, in turn, rotate compressor rotors and the fan rotor.

As can be appreciated, many components in the turbine section see very high temperatures. Two such components would be the turbine blades and blade outer air seals. Blade outer air seals typically sit radially outwardly of the blades and maintain clearance to increase the efficient use of the products of combustion.

One type of blade outer air seal is a so-called self-acting clearance control blade outer air seal. In such a blade outer air seal, two components formed of different materials having different coefficients of thermal expansion combine to control the expansion of the blade outer air seals to, in turn, control the clearance with the blade.

Both the blade and the blade outer air seal are provided with cooling air.

Traditionally, a turbine rotated at the same speed as the fan rotor. More recently, it has been proposed to include a gear reduction between a fan drive turbine and the fan rotor. With this change, the pressures and temperatures seen across the turbine sections have increased. In fact, the overall compression ratio of engines has been increasing, even in engines without a gear reduction. Again, the pressures and temperatures in the high pressure turbine sections have increased.

Thus, to drive cooling air into the turbine, the cooling air must be at a higher pressure than in the past. The highest pressure in the gas turbine engine is that downstream of a high pressure compressor. However, this cooling air is also at relatively high temperatures.

Thus, it has been proposed to tap high pressure air from a location downstream of the high pressure compressor and pass it through a heat exchanger prior to being delivered to the turbine section for cooling.

WO 2014/134513 A1 discloses a prior art gas turbine engine as set forth in the preamble of claim 1.

EP 1 503 061 A discloses a prior art method for cooling hot parts of a turboject by air cooled in an external heat exchanger.

### SUMMARY OF THE INVENTION

From one aspect, there is provided a gas turbine engine as recited in claim 1.

In an embodiment, the outer wall is an outer core engine wall.

In another embodiment according to any of the above, the air is tapped from a location downstream of a downstream most point in a high pressure compressor in the compressor section.

In another embodiment according to any of the above, the blade outer air seal includes components of at least two different materials having two distinct coefficients of thermal expansion.

In another embodiment according to any of the above, a fan delivers air into the compressor section and into a bypass. A fan drive turbine of the turbine section drives the fan through a gear reduction.

These and other features may be best understood from the following drawings and specification.

### BRIEF DESCRIPTION OF THE DRAWINGS

Figure 1 schematically shows a gas turbine engine.
Figure 2 shows a detail of a cooling path.
Figure 3 is a cross-section along line 3-3 of Figure 2.

### DETAILED DESCRIPTION

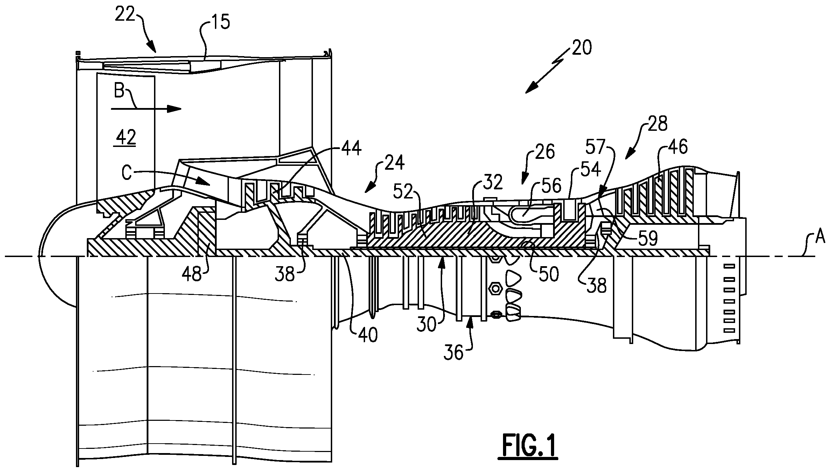

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350.5 meters/second).

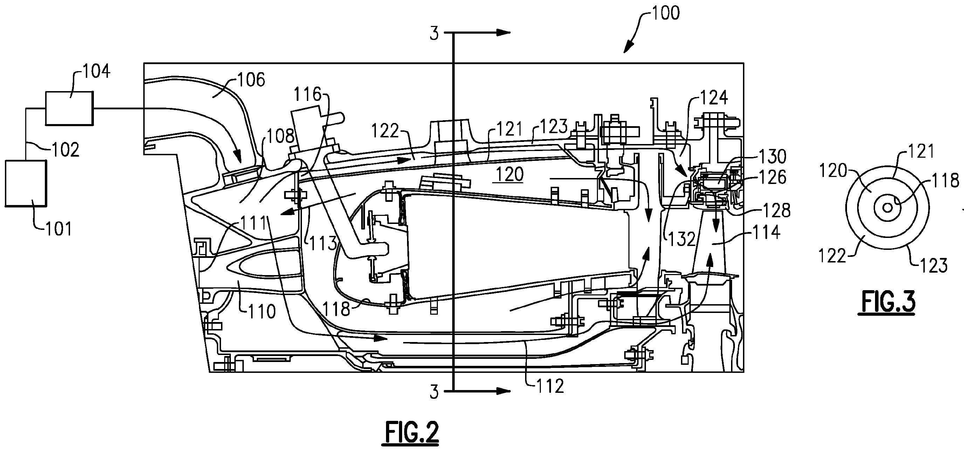

Figure 2 shows a cooling system 100 for cooling turbine components. As shown, a compressor section 101 is provided with a tap 102 for tapping pressurized air.

The tap 102 may be at a location upstream from a downstream most portion 111 of the high pressure compressor, in which case, it is typically provided with a boost compressor to raise its pressure. Alternatively, the air can be tapped from a location downstream of 111 where it has been fully compressed by the high pressure compressor.

In either case, pressurized air passes through a heat exchanger 104 where it is cooled, such as by air. In one embodiment, the heat exchanger 104 may be in the bypass duct as described in Figure 1.

The air downstream of the heat exchanger 104 is then returned through a conduit 106 into a mixing chamber 108. The mixing chamber 108 may be downstream of a diffuser 110 which is downstream of the downstream most portion 111 of a high pressure compressor. The air in mixing chamber 108 is mixed with air shown schematically at 113 from a diffuser chamber 120 which surrounds a combustor 118. This air is generally at the same pressure as the air leaving the downstream most point 111.

The mixing chamber is defined radially outwardly of a compressor diffuser 110 and the air passing through vanes within the compressor diffuser.

This mixed air is shown at 112 passing to cool turbine blade 114.

Another tap 116 taps cooling air from the mixing chamber 108. This air is passed into a chamber 122 defined between a cooling air chamber wall 121 and a core engine outer housing wall 123. This air passes into another chamber 124 and across a blade outer air seal 126.

As shown, blade outer air seal 126 includes a seal 128, a first component 130, and a second component 132. The components 130 and 132 may be formed of materials having different thermal coefficients of expansion and they self-regulate a gap between an outer tip of the blade 114 and an inner surface on the seal 128.

While this particular type blade outer air seal is disclosed, it should be understood that blade outer air seals having other clearance control schemes are known, as are blade outer air seals without any clearance control. This disclosure will also benefit all of these types of blade outer air seals.

Figure 3 shows further details including the combustor 118, the chamber 120 surrounding the combustor 118. The chamber wall 121, and the outer core housing 123 define the intermediate cooling air chamber 122. Chamber 122 surrounds a rotated axis of the engine at least about 270° and in embodiments between 350° and 360°.

Although an embodiment of this invention has been disclosed, a worker of ordinary skill in this art would recognize that certain modifications would come within the scope of this invention as defined by the appended claims.

## Claims

1. A gas turbine engine (20) comprising:
a compressor section (24; 101), a combustor (56; 118), and a turbine section (28), said combustor (56; 118) having a radially outer surface defining a diffuser chamber (120) radially outwardly of said combustor (56; 118), and a cooling air chamber wall (121) positioned outwardly of said diffuser chamber (120) and said combustor (56; 118), and radially inwardly of a second wall (123) to define a cooling air chamber (122), said turbine section (28) including a high pressure turbine first stage blade (114) having an outer tip, and a blade outer air seal (126) positioned radially outwardly of said outer tip; and
a tap (102) for tapping air having been compressed by said compressor section (24; 101), said tapped air being passed through a heat exchanger (104), tapped air downstream of said heat exchanger (104) passing into said cooling air chamber (122), and then to said blade outer air seal (126);
**characterised in that**:
said tapped air downstream of said heat exchanger (104) passes into a mixing chamber (108) where it is mixed with air (113) from said diffuser chamber (120), and then passes into said cooling air chamber (122);
air (112) from said mixing chamber (108) also passes radially inwardly of said combustor (56; 118) to cool said first turbine stage blade (114); and
said mixing chamber (108) is defined radially outwardly of a compressor diffuser (110) and the air (112) passes through vanes within said compressor diffuser (110).

2. The gas turbine engine as set forth in claim 1, wherein said second wall (123) is an outer core engine wall (123).

3. The gas turbine engine as set forth in claim 1 or 2, wherein said air is tapped from a location downstream of a downstream-most point (111) in a high pressure compressor (52) in said compressor section (24; 101).

4. The gas turbine engine as set forth in any preceding claim, wherein said blade outer air seal (126) includes components (130, 132) of at least two different materials having two distinct coefficients of thermal expansion.

5. The gas turbine engine as set forth in any preceding claim, wherein a fan (42) delivers air into said compressor section (24; 101) and into a bypass (B), and a fan drive turbine (46) of said turbine section (28) drives said fan (42) through a gear reduction (48).

## Patentansprüche

1. Gasturbinentriebwerk (20), umfassend:
einen Verdichterabschnitt (24; 101), eine Brennkammer (56; 118) und einen Turbinenabschnitt (28), wobei die Brennkammer (56; 118) eine radial äußere Fläche aufweist, die eine Diffusorkammer (120) radial außerhalb der Brennkammer (56; 118) definiert, und eine Kühlluftkammerwand (121) außerhalb der Diffusorkammer (120) und der Brennkammer (56; 118) und radial innerhalb einer zweiten Wand (123) positioniert ist, um eine Kühlluftkammer (122) zu definieren, wobei der Turbinenabschnitt (28) eine Hochdruckturbinenschaufel der ersten Stufe (114) beinhaltet, die eine Außenspitze aufweist, und eine äußere Schaufelluftdichtung (126) radial außerhalb der Außenspitze positioniert ist; und
eine Zapfvorrichtung (102) zum Zapfen von Luft, die durch den Verdichterabschnitt (24; 101) verdichtet worden ist, wobei die gezapfte Luft durch einen Wärmetauscher (104) gegeben wird, wobei gezapfte Luft stromabwärts des Wärmetauschers (104) in die Kühlluftkammer (122) und dann zu der äußeren Schaufelluftdichtung (126) verläuft;
**dadurch gekennzeichnet, dass**:
die gezapfte Luft stromabwärts des Wärmetauschers (104) in eine Mischkammer (108) verläuft, in der sie mit Luft (113) aus der Diffusorkammer (120) vermischt wird, und dann in die Kühlluftkammer (122) verläuft;
Luft (112) aus der Mischkammer (108) auch radial innerhalb der Brennkammer (56; 118) verläuft, um die Turbinenschaufel der ersten Stufe (114) zu kühlen; und
die Mischkammer (108) radial außerhalb eines Verdichterdiffusors (110) definiert ist und die Luft (112) Schaufeln innerhalb des Verdichterdiffusors (110) durchläuft.

2. Gasturbinentriebwerk nach Anspruch 1, wobei die zweite Wand (123) eine äußere Kerntriebwerkswand (123) ist.

3. Gasturbinentriebwerk nach Anspruch 1 oder 2, wobei die Luft von einer Stelle stromabwärts eines stromabwärtigsten Punktes (111) in einem Hochdruckverdichter (52) in dem Verdichterabschnitt (24; 101) gezapft wird.

4. Gasturbinentriebwerk nach einem vorhergehenden Anspruch, wobei die äußere Schaufelluftdichtung (126) Komponenten (130, 132) aus zumindest zwei unterschiedlichen Materialien beinhaltet, die zwei separate Wärmeausdehnungskoeffizienten aufweisen.

5. Gasturbinentriebwerk nach einem vorhergehenden Anspruch, wobei ein Gebläse (42) Luft in den Verdichterabschnitt (24; 101) und in eine Umgehung (B) abgibt und eine Gebläseantriebsturbine (46) des Turbinenabschnitts (28) das Gebläse (42) durch eine Getriebeuntersetzung (48) antreibt.

## Revendications

1. Moteur à turbine à gaz (20) comprenant :
une section compresseur (24 ; 101), une chambre de combustion (56 ; 118), et une section turbine (28), ladite chambre de combustion (56 ; 118) ayant une surface radialement extérieure définissant une chambre de diffuseur (120) radialement vers l'extérieur de ladite chambre de combustion (56 ; 118), et une paroi de chambre d'air de refroidissement (121) positionnée vers l'extérieur de ladite chambre de diffuseur (120) et de ladite chambre de combustion (56 ; 118), et radialement vers l'intérieur d'une deuxième paroi (123) pour définir une chambre d'air de refroidissement (122), ladite section turbine (28) incluant une aube de premier étage de turbine haute pression (114) ayant une pointe extérieure, et un joint d'air extérieur d'aube (126) positionné radialement vers l'extérieur de ladite pointe extérieure ; et
un robinet (102) pour soutirer l'air ayant été comprimé par ladite section compresseur (24 ; 101), ledit air soutiré étant passé à travers un échangeur de chaleur (104), l'air soutiré en aval dudit échangeur de chaleur (104) passant dans ladite chambre d'air de refroidissement (122), et ensuite vers ledit joint d'air extérieur d'aube (126) ;
**caractérisé en ce que** :
ledit air soutiré en aval dudit échangeur de chaleur (104) passe dans une chambre de mélange (108) où il est mélangé avec l'air (113) de ladite chambre de diffuseur (120), et passe ensuite dans ladite chambre d'air de refroidissement (122) ;
l'air (112) de ladite chambre de mélange (108) passe aussi radialement vers l'intérieur de ladite chambre de combustion (56 ; 118) pour refroidir ladite première aube d'étage de turbine (114) ; et
ladite chambre de mélange (108) est définie radialement vers l'extérieur d'un diffuseur de compresseur (110) et l'air (112) passe à travers des ailettes à l'intérieur dudit diffuseur de compresseur (110).

2. Moteur à turbine à gaz selon la revendication 1, dans lequel ladite deuxième paroi (123) est une paroi de moteur à noyau externe (123).

3. Moteur à turbine à gaz selon la revendication 1 ou 2, dans lequel ledit air est soutiré d'un endroit en aval d'un point le plus en aval (111) dans un compresseur haute pression (52) dans ladite section compresseur (24 ; 101).

4. Moteur à turbine à gaz selon une quelconque revendication précédente, dans lequel ledit joint d'air extérieur d'aube (126) inclut des composants (130, 132) d'au moins deux matériaux différents ayant deux coefficients de dilatation thermique distincts.

5. Moteur à turbine à gaz selon une quelconque revendication précédente, dans lequel un ventilateur (42) distribue de l'air dans ladite section compresseur (24 ; 101) et dans une dérivation (B), et une turbine d'entraînement de ventilateur (46) de ladite section turbine (28) entraîne ledit ventilateur (42) à travers une réduction de vitesse (48).
